# EUROPEAN PATENT APPLICATION

(11) **EP 4 694 303 A1**
(43) Date of publication of application: **11.02.2026**
(21) Application number: 24784189.3
(22) Date of filing: 29.03.2024
(51) Int. Cl.: H04W 24/10

(54) **METHOD AND APPARATUS FOR SENDING DELAY INFORMATION REPORT SCHEDULING REQUEST SR**

(30) Priority: 04.04.2023 CN 202310361692
(71) Applicant: Vivo Mobile Communication Co., Ltd., Dongguan, Guangdong 523863 (CN)
(72) Inventor: LIU, Jinhua, Dongguan, Guangdong 523863 (CN)
(74) Representative: Murgitroyd & Company
(86) International application number: PCT/CN2024/084888
(87) International publication number: WO 2024/208104

(57) **Abstract**

This application discloses a method and an apparatus for sending a scheduling request SR for a delay information report, and relates to the field of communications technologies. The method for sending the scheduling request SR for the delay information report in embodiments of this application includes: A terminal determines, in a case that the terminal determines that a delay information report is triggered, a target sending resource for an SR based on SR resource information configured by a network side device, where the SR is triggered by reporting the delay information report. The terminal sends the SR to the network side device on the target sending resource, where the SR resource information includes at least one of the following: first configuration information, used to indicate at least one sending resource for the SR; and second configuration information, used to indicate at least one sending resource for an SR for a non-delay information report.

## Description

### CROSS-REFERENCE TO RELATED APPLICATION

This application claims priority to Chinese Patent Application No. 202310361692.1, filed on April 4, 2023 in China, which is incorporated herein by reference in its entirety.

### TECHNICAL FIELD

This application relates to the field of communications technologies, and specifically, to a method and an apparatus for sending a scheduling request SR for a delay information report.

### BACKGROUND

The extended reality (eXtended Reality, XR) project of the 3rd Generation Partnership Project (3rd Generation Partnership Project, 3GPP) has decided to introduce delay information reporting for buffered data from user equipment (User Equipment, UE) to a base station.

Currently, methods for reporting delay information include reporting delay information corresponding to buffered data along with buffer information corresponding to the buffered data as a new buffer status report (Buffer Status Report, BSR), and reporting delay information of buffered data and buffer information of UE separately using a medium access control (Medium Access Control, MAC) control element (Control Element, CE). Regardless of the method used, the UE needs to send a scheduling request (Scheduling Request, SR) in a timely manner to notify the base station to allocate a physical uplink shared channel (Physical Uplink Shared Channel, PUSCH) resource in a timely manner for sending a delay information report. In a case that the UE does not have an appropriate SR resource for the delay information report, the base station cannot obtain the delay information report for the buffered data of the UE in a timely manner. As a result, the base station cannot schedule the buffered data in a timely manner, and even further, the buffered data of the UE is lost due to timeout of waiting time.

Therefore, how the UE determines the SR resource for the delay information report is a technical problem that needs to be urgently resolved.

### SUMMARY

Embodiments of this application provide a method and an apparatus for sending a scheduling request SR for a delay information report, which can resolve a problem of how UE determines an SR resource for a delay information report.

According to a first aspect, a method for sending a scheduling request SR for a delay information report is provided, and includes:

A terminal determines, in a case that the terminal determines that a delay information report is triggered, a target sending resource for an SR based on SR resource information configured by a network side device, where the SR is triggered by reporting the delay information report.

The terminal sends the SR to the network side device on the target sending resource, where
the SR resource information includes at least one of the following:
first configuration information, used to indicate at least one sending resource for the SR; and
second configuration information, used to indicate at least one sending resource for an SR for a non-delay information report.

According to a second aspect, a method for sending a scheduling request SR for a delay information report is provided, and includes:

A network side device configures SR resource information corresponding to a terminal, where the SR resource information is used by the terminal to determine a target sending resource for an SR based on the SR resource information in a case that the terminal determines that a delay information report is triggered, and the SR is triggered by reporting the delay information report.

The network side device sends the SR resource information to the terminal.

The network side device receives the SR sent by the terminal, where
the SR resource information includes at least one of the following:
first configuration information, used to indicate at least one sending resource for the SR; and
second configuration information, used to indicate at least one sending resource for an SR for a non-delay information report.

According to a third aspect, an apparatus for sending a scheduling request SR for a delay information report is provided, and includes:
a first determining module, configured to determine, in a case that the apparatus determines that a delay information report is triggered, a target sending resource for an SR based on SR resource information configured by a network side device, where the SR is triggered by reporting the delay information report; and
a first sending module, configured to send the SR to the network side device on the target sending resource, where
the SR resource information includes at least one of the following:
   first configuration information, used to indicate at least one sending resource for the SR; and
   second configuration information, used to indicate at least one sending resource for an SR for a non-delay information report.

According to a fourth aspect, an apparatus for sending a scheduling request SR for a delay information report is provided, and includes:
a second determining module, configured to configure SR resource information corresponding to a terminal, where the SR resource information is used by the terminal to determine a target sending resource for an SR based on the SR resource information in a case that the terminal determines that a delay information report is triggered, and the SR is triggered by reporting the delay information report;
a second sending module, configured to send the SR resource information to the terminal; and
a first receiving module, configured to receive the SR sent by the terminal, where
the SR resource information includes at least one of the following:
   first configuration information, used to indicate at least one sending resource for the SR; and
   second configuration information, used to indicate at least one sending resource for an SR for a non-delay information report.

According to a fifth aspect, a terminal is provided. The terminal includes a processor and a memory, the memory stores a program or an instruction that is executable on the processor, and the program or the instruction is executed by the processor to implement the steps of the method according to the first aspect.

According to a sixth aspect, a terminal is provided, and includes a processor and a communication interface. The processor is configured to determine, in a case that the terminal determines that a delay information report is triggered, a target sending resource for an SR based on SR resource information configured by a network side device, where the SR is triggered by reporting the delay information report. The communication interface is configured to send the SR to the network side device on the target sending resource, where the SR resource information includes at least one of the following: first configuration information, used to indicate at least one sending resource for the SR; and second configuration information, used to indicate at least one sending resource for an SR for a non-delay information report.

According to a seventh aspect, a network side device is provided. The network side device includes a processor and a memory, the memory stores a program or an instruction that is executable on the processor, and the program or the instruction is executed by the processor to implement the steps of the method according to the first aspect.

According to an eighth aspect, a network side device is provided, and includes a processor and a communication interface. The processor is configured to configure SR resource information corresponding to a terminal, where the SR resource information is used by the terminal to determine a target sending resource for an SR based on the SR resource information in a case that the terminal determines that a delay information report is triggered, and the SR is triggered by reporting the delay information report. The communication interface is configured to send the SR resource information to the terminal. The communication interface is further configured to receive the SR sent by the terminal, where the SR resource information includes at least one of the following: first configuration information, used to indicate at least one sending resource for the SR; and second configuration information, used to indicate at least one sending resource for an SR for a non-delay information report.

According to a ninth aspect, a readable storage medium is provided. The readable storage medium stores a program or an instruction, and when the program or the instruction is executed by a processor, the steps of the method according to the first aspect are implemented, or the steps of the method according to the second aspect are implemented.

According to a tenth aspect, a wireless communication system is provided, and includes a terminal and a network side device. The terminal may be configured to perform the steps of the method according to the first aspect, and the network side device may be configured to perform the steps of the method according to the second aspect.

According to an eleventh aspect, a chip is provided. The chip includes a processor and a communication interface, the communication interface is coupled to the processor, and the processor is configured to run a program or an instruction to implement the method according to the first aspect or the method according to the second aspect.

According to a twelfth aspect, a computer program/program product is provided. The computer program/program product is stored in a storage medium, and the program/program product is executed by at least one processor to implement the steps of the method for sending the scheduling request SR for the delay information report according to the first aspect or implement the steps of the method for sending the scheduling request SR for the delay information report according to the second aspect.

In the embodiments of this application, the terminal determines, in the case that the terminal determines that the delay information report is triggered, the target sending resource for the SR based on the SR resource information configured by the network side device, where the SR is triggered by reporting the delay information report. Because the SR resource information includes at least one of the following: the first configuration information, used to indicate the at least one sending resource for the SR; and the second configuration information, used to indicate the at least one sending resource for the SR for the non-delay information report, the terminal may determine the target sending resource for the SR based on any one of the first configuration information and the second configuration information, and then send the SR to the network side device on the target sending resource. Therefore, the network side device obtains a delay information report for buffered data of the terminal in a timely manner, and schedules the buffered data of the terminal in a timely manner. This can prevent the buffered data of the terminal from being lost due to timeout of the waiting time, to improve transmission performance of uplink data.

### BRIEF DESCRIPTION OF DRAWINGS

FIG. 1 is a structural diagram of a wireless communication system to which embodiments of this application may be applied;
FIG. 2 is a first schematic diagram of a format of a BSR MAC CE in a related technology;
FIG. 3 is a second schematic diagram of a format of a BSR MAC CE in a related technology;
FIG. 4 is a first schematic flowchart of a method for sending a scheduling request SR for a delay information report according to an embodiment of this application;
FIG. 5 is a second schematic flowchart of a method for sending a scheduling request SR for a delay information report according to an embodiment of this application;
FIG. 6 is a first schematic diagram of interaction between a terminal and a network side device according to an embodiment of this application;
FIG. 7 is a second schematic diagram of interaction between a terminal and a network side device according to an embodiment of this application;
FIG. 8 is a first schematic diagram of a structure of an apparatus for sending a scheduling request SR for a delay information report according to an embodiment of this application;
FIG. 9 is a second schematic diagram of a structure of an apparatus for sending a scheduling request SR for a delay information report according to an embodiment of this application;
FIG. 10 is a schematic diagram of a structure of a communication device according to an embodiment of this application;
FIG. 11 is a schematic diagram of a structure of a terminal according to an embodiment of this application; and
FIG. 12 is a schematic diagram of a structure of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

Terms such as "first" and "second" in this application are used to distinguish between similar objects, and are not used to describe a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, "or" in this application means at least one of the connected objects. For example, "A or B" includes three solutions, namely: solution 1: include A but exclude B; solution 2: include B but exclude A; and solution 3: include both A and B. The character "/" usually indicates an "or" relationship between the associated objects.

The term "indication" in this application may be a direct indication (or explicit indication) or an indirect indication (or implicit indication). The direct indication may be understood as that a sender explicitly notifies a sent indication of content such as specific information, an operation that needs to be performed, or a request result to a receiver. The indirect indication may be understood as that the receiver determines corresponding information according to the indication sent by the sender, or performs determining according to the indication sent by the sender, and determines, according to a determining result, the operation that needs to be performed, the request result, or the like.

It should be noted that technologies described in the embodiments of this application are not limited to a long term evolution (Long Term Evolution, LTE)/LTE-Advanced (LTE-Advanced, LTE-A) system, and may be further applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of this application may be used interchangeably. The technologies described can be applied to both the systems and the radio technologies mentioned above as well as to other systems and radio technologies. A new radio (New Radio, NR) system is described in the following descriptions for illustrative purposes, and the NR terminology is used in most of the following descriptions, although these technologies can also be applied to a system other than the NR system, such as a 6^{th} generation (6^{th} Generation, 6G) communication system.

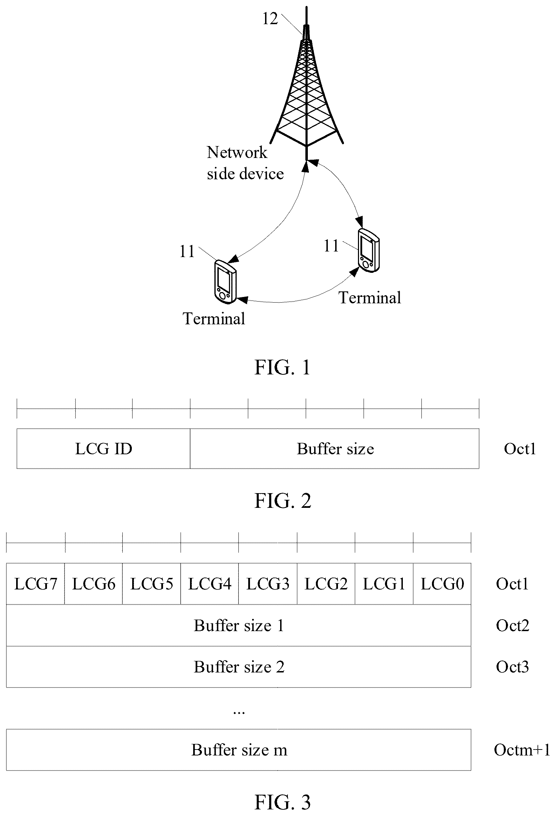

FIG. 1 is a block diagram of a wireless communication system to which embodiments of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship user equipment, pedestrian user equipment (Pedestrian User Equipment, PUE), a smart home (a home device with a wireless communication function, such as a refrigerator, a television, a washing machine, or a furniture), a game console, a personal computer (Personal Computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart chain, and the like), a smart wrist strap, a smart dress, and the like. The vehicle user equipment may also be referred to as a vehicle terminal, a vehicle controller, a vehicle module, a vehicle component, a vehicle chip, a vehicle unit, or the like. It should be noted that a specific type of the terminal 11 is not limited in the embodiments of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), wireless fidelity (Wireless Fidelity, Wi-Fi) node, or the like. The base station may be referred to as a NodeB (NodeB, NB), an evolved NodeB (Evolved NodeB, eNB), a next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the field. Provided that a same technical effect is achieved, the base station is not limited to a specified technical term. It should be noted that, in the embodiments of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that, in the embodiments of this application, only a core network device in an NR system is used as an example for description, and a specific type of the core network device is not limited.

To facilitate a clearer understanding of the embodiments of this application, some relevant background technology knowledge is first described below.
I. Progress of the 3rd Generation Partnership Project (3rd Generation Partnership Project, 3GPP)

In the extended reality (eXtended Reality, XR) work item description (Work Item Description, WID) of 3GPP Release 18 (Release 18), work content of XR has been defined. Work objectives related to a buffer status report (Buffer Status Report, BSR) are as follows:
1. BSR enhancement includes at least a new buffer size level (buffer size level, BSL) table.
2. Report delay information of buffered data in an uplink.

The second item is to support reporting of delay information of buffered data of user equipment (User Equipment, UE). Currently, in the discussion of 3GPP, there are two message designs for reporting delay information. The first one is to include delay information in a BSR as a part of uplink buffer information of the UE to be reported to a base station. The second one is to introduce a new medium access control (Medium Access Control, MAC) control element (Control Element, CE) that is dedicated to reporting of the delay information. Regardless of the first method or the second method, after determining that the delay information needs to be reported, the UE needs to request the base station for scheduling.

### II. Brief introduction to Rel-15/16 BSR

The Rel-15 BSR is currently supported by default. In the Rel-15 BSR, there are the following types of BSRs:
1. A regular (Regular) BSR is triggered in any of the following cases:
   (1) An LCH with a higher priority than a current logical channel (Logical Channel, LCH) with data sending transitions from no data sending to data sending.
   (2) When all LCHs have no data to send, one LCH starts sending data.
   (3) When a BSR retransmission timer (retxBSR-Timer) expires, at least one LCH still has data to send.
2. A periodic BSR (Periodic BSR) is triggered when a periodic BSR sending Timer (periodic BSR-Timer) expires.
3. A padding BSR (Padding BSR) is triggered when a MAC protocol data unit (Protocol Data Unit, PDU) still has a remaining capacity to accommodate a BSR MAC CE after accommodating all data.

An LCH belongs to an LCH group (group). A buffer size level (buffer size level, BSL) of the BSR is reported at a granularity of a logical channel group (Logical Channel Group, LCG), and a maximum of 8 LCGs may be configured. The regular BSR may trigger sending of the SR. In a case that no grant (grant) is obtained after the last sending of the SR, SR retransmission may be triggered.

A format of the BSR MAC CE in NR Rel-15 is shown in FIG. 2 and FIG. 3. FIG. 2 is a first schematic diagram of a format of a BSR MAC CE in a related technology. As shown in FIG. 2, the format of the BSR MAC CE in FIG. 2 is a format of a short BSR and a short truncated BSR MAC CE, where Oct represents octal. FIG. 3 is a second schematic diagram of a format of a BSR MAC CE in a related technology. As shown in FIG. 3, the format of the BSR MAC CE in FIG. 3 is a format of a long BSR and a long truncated BSR MAC CE, where Oct represents octal.

For the regular/periodic BSR, in a case that the UE has data for more than one LCG, the UE uses the long BSR; otherwise, the UE uses the short BSR.

After the BSR is triggered, a corresponding scheduling request SR is sent. Currently, in the 3GPP Radio Resource Control (Radio Resource Control, RRC) protocol, it is supported that an SR sending resource is configured based on the LCH. To be specific, when data of an LCH reaches to trigger the regular BSR, in a case that there is no physical uplink shared channel (Physical Uplink Shared Channel, PUSCH) resource available to carry the regular BSR, sending of the corresponding SR is triggered. In a case that there is no available corresponding SR sending resource, a random access channel (Random Access Channel, RACH) procedure may be triggered to send the BSR.

In the current protocol, the regular BSR (regular BSR) that is reported for buffer information of the UE is triggered by arrival of new data on the logical channel. In a case that there is no available PUSCH resource to carry the regular BSR, the terminal triggers sending of the SR. After receiving the SR sent by the terminal, the base station determines that the UE has a requirement of sending uplink data and accordingly sends an uplink transmission grant.

When a delay information report is introduced, when the delay information report of the UE triggers reporting, in a case that there is no available PUSCH resource to carry the delay information report, the terminal still needs to send the SR to the base station. However, problems of triggering sending of the reported SR by the delay information report involve several aspects. For example, a first aspect is how the base station configures a sending resource for the SR for the delay information report; a second aspect is how the UE determines an SR resource for reporting the delay information report; and a third aspect is how to ensure rapid sending of the SR for the delay information report. For the UE, in a case that the UE does not have an appropriate SR resource for the delay information report, the base station cannot obtain the delay information report for the buffered data of the UE in a timely manner. As a result, the base station cannot schedule the buffered data in a timely manner, and even further, the buffered data of the UE is lost due to timeout of waiting time. Therefore, how the UE determines the SR resource for the delay information report is a technical problem that needs to be urgently resolved.

With reference to the accompanying drawings, a method for sending a scheduling request SR for a delay information report provided in the embodiments of this application is described in detail by using some embodiments and application scenarios thereof.

The method for sending the scheduling request SR for the delay information report provided in the embodiments of this application may be applied to a scenario in which a terminal sends a delay information report to a base station. The terminal determines, in a case that the terminal determines that a delay information report is triggered, a target sending resource for an SR based on SR resource information configured by a network side device, where the SR is triggered by reporting the delay information report. Because the SR resource information includes at least one of the following: first configuration information, used to indicate at least one sending resource for the SR; and second configuration information, used to indicate at least one sending resource for an SR for a non-delay information report, the terminal may determine the target sending resource based on any one of the first configuration information and the second configuration information, and then send the SR to the network side device on the target sending resource. Therefore, the network side device obtains a delay information report for buffered data of the terminal in a timely manner, and schedules the buffered data of the terminal in a timely manner. This can prevent the buffered data of the terminal from being lost due to timeout of the waiting time, to improve transmission performance of uplink data.

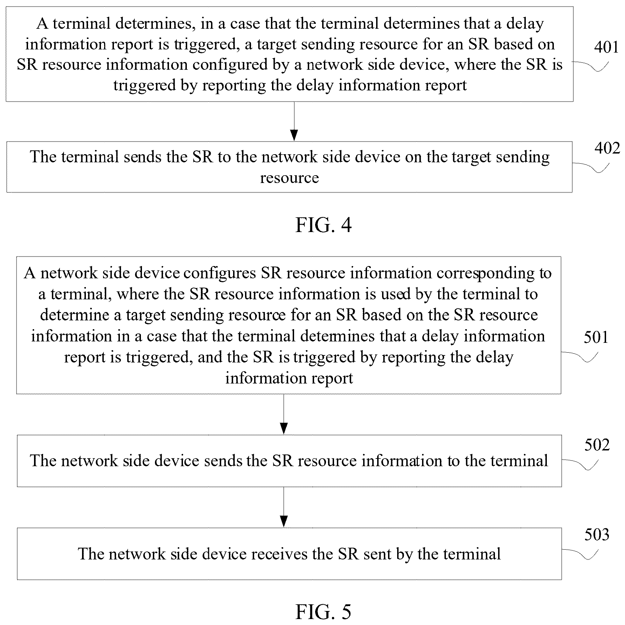

FIG. 4 is a first schematic flowchart of a method for sending a scheduling request SR for a delay information report according to an embodiment of this application. As shown in FIG. 4, the method includes step 401 and step 402.

Step 401: A terminal determines, in a case that the terminal determines that a delay information report is triggered, a target sending resource for an SR based on SR resource information configured by a network side device, where the SR is triggered by reporting the delay information report.

It should be noted that this embodiment of this application may be applied to a scenario in which the terminal sends the delay information report to the network side device. The terminal includes but is not limited to the type of the terminal 11 listed above, and the network side device includes but is not limited to the type of the network side device 12 listed above. This is not limited in this embodiment of this application. The delay information report is a delay information report of buffered data of the terminal. The SR is triggered by reporting the delay information report.

Optionally, the terminal receives the SR resource information from the network side device.

Specifically, the network side device sends the configured SR resource information to the terminal, and the terminal may receive the SR resource information sent by the network side device. The SR resource information includes at least one of the following: first configuration information, used to indicate at least one sending resource for the SR; and second configuration information, used to indicate at least one sending resource for an SR for a non-delay information report.

The terminal may determine, in the case that the terminal determines that the delay information report is triggered, the target sending resource for the SR based on the first configuration information or the second configuration information configured by the network side device.

Optionally, the delay information report includes any one of the following:
a. delay information of at least one logical channel (Logical Channel, LCH) or at least one logical channel group (Logical Channel Group, LCG); and
b. buffer information of at least one LCH or at least one LCG, and delay information corresponding to the buffer information.

Optionally, the delay information report is sent via a MAC control element CE.

Step 402: The terminal sends the SR to the network side device on the target sending resource.

Specifically, after determining the target sending resource for the SR, the terminal may send the SR to the network side device on the target sending resource, so that the network side device obtains the delay information report of the buffered data of the terminal in a timely manner, and schedules the buffered data of the terminal in a timely manner, to prevent the buffered data of the terminal from being lost due to timeout of waiting time.

In the method for sending the scheduling request SR for the delay information report provided in this embodiment of this application, the terminal determines, in the case that the terminal determines that the delay information report is triggered, the target sending resource for the SR based on the SR resource information configured by the network side device, where the SR is triggered by reporting the delay information report. Because the SR resource information includes at least one of the following: the first configuration information, used to indicate the at least one sending resource for the SR; and the second configuration information, used to indicate the at least one sending resource for the SR for the non-delay information report, the terminal may determine the target sending resource based on any one of the first configuration information and the second configuration information, and then send the SR to the network side device on the target sending resource. Therefore, the network side device obtains a delay information report for buffered data of the terminal in a timely manner, and schedules the buffered data of the terminal in a timely manner. This can prevent the buffered data of the terminal from being lost due to timeout of the waiting time, to improve transmission performance of uplink data.

Optionally, the first configuration information meets at least one of the following:
(1) One medium access control MAC entity of the terminal corresponds to one sending resource for the SR.

Specifically, one sending resource for the SR used to trigger the delay information report may be configured for one MAC entity of the terminal, and is used to send the SR for the delay information report. Usually, one terminal has only one delay emergency service. Therefore, it is sufficient for the network side device to configure, based on the MAC entity, the sending resource for the SR used to trigger the delay information report. In a case that one terminal has more than one delay emergency service, delay information reports of the multiple delay emergency services may share one sending resource for the SR to reduce sending resource overheads of the SR.

(2) One wireless link of the terminal corresponds to one sending resource for the SR.

Specifically, one sending resource for the SR used to trigger the delay information report may be configured for one wireless link of the terminal, and is used to send the SR for the delay information report. In a case that one MAC entity of the terminal has more than one wireless link, the network side device may configure one sending resource for the SR for each wireless link, used to send the SR for the delay information report of each wireless link. For example, a MAC entity of remote UE (remote UE) may have a direct wireless link with the network side device and an indirect wireless link established with the network side device through relay UE (U2N relay UE). Then, the network side device may configure, for the MAC entity of the remote UE, one sending resource for the SR for sending the delay information report on the direct wireless link and another sending resource for the SR for sending the delay information report on the indirect wireless link. The two sending resources for the SR, namely, the sending resource for the SR for sending the delay information report on the direct wireless link and the sending resource for the SR for sending the delay information report on the indirect wireless link, may be the same or different, which depends on configuration of the network side device.

(3) One logical channel (Logical Channel, LCH) of the terminal corresponds to one sending resource for the SR.

Specifically, one sending resource for the SR used to trigger the delay information report may be configured for one LCH of the terminal. In this way, after receiving an SR for the delay information report, the network side device may determine a logical channel that triggers the delay information report, so that the network side device determines to schedule a time-frequency resource allocation parameter, a modulation and coding scheme (Modulation and Coding Scheme, MCS) parameter, and the like of a physical uplink shared channel (Physical Uplink Shared Channel, PUSCH) that matches a transmission quality requirement of the logical channel. To achieve this objective, when one terminal has multiple logical channels that trigger the delay information report, the terminal needs to occupy sending resources that are for the SR for the delay information report and that are configured for multiple different logical channels.

Optionally, a specific implementation of step 401 includes at least one of the following:
(a) In a case that the terminal determines that the delay information report is triggered, and the SR resource information includes the first configuration information, the terminal determines the target sending resource based on the first configuration information.

Specifically, after the terminal receives the SR resource information configured by the network side device, in a case that the terminal determines that the delay information report is triggered, and the SR resource information includes the first configuration information, that is, the terminal is configured with at least one sending resource for the SR for reporting the delay information report, after the delay information report is triggered, in a case that the terminal does not have an available physical uplink shared channel (Physical Uplink Shared Channel, PUSCH) resource, the terminal may determine the target sending resource from the at least one sending resource for the SR used to trigger the delay information report, and send, by using the target sending resource, the SR for reporting the delay information report, so that the SR for reporting the delay information report can be quickly sent. The network side device may determine, based on the received SR, that the terminal is to report the delay information report. The network side device may quickly allocate a corresponding PUSCH resource accordingly, so that the terminal reports the delay information report as soon as possible, and the network side device obtains the delay information report for the buffered data of the terminal in the timely manner, and schedules the buffered data of the terminal in the timely manner. This can prevent the buffered data of the terminal from being lost due to timeout of the waiting time, and improve transmission performance of the uplink data.

(b) In a case that the terminal determines that the delay information report is triggered, and the SR resource information includes the second configuration information, the terminal determines the target sending resource based on the second configuration information.

Specifically, after the terminal receives the SR resource information configured by the network side device, in a case that the terminal determines that the delay information report is triggered, and the SR resource information includes the second configuration information, that is, the terminal is not configured with the sending resource for the SR dedicated to the delay information report, but the terminal is configured with at least one sending resource for the SR for the non-delay information report, after the delay information report is triggered, in a case that the terminal does not have an available PUSCH resource, the terminal is allowed to determine the target sending resource for the SR from the at least one sending resource for the SR for the non-delay information report, so that the SR for reporting the delay information report can be quickly sent, to prompt the network side device to schedule uplink transmission of the terminal in a timely manner. The network side device may determine, based on the received SR, that the terminal is to report the delay information report. The network side device may quickly allocate a corresponding PUSCH resource accordingly, so that the UE reports the delay information as soon as possible, and the network side device obtains the delay information report for the buffered data of the terminal in the timely manner, and schedules the buffered data of the terminal in the timely manner. This can prevent the buffered data of the terminal from being lost due to timeout of the waiting time, and improve transmission performance of the uplink data.

Optionally, that the SR resource information includes the second configuration information includes any one of the following:
1. The network side device is not configured with the first configuration information. Specifically, a protocol defines configuration signaling for the sending resource for the SR that triggers the delay information report. However, the network side device does not configure, for the terminal, the sending resource for the SR that triggers the delay information report. In other words, the terminal has not been configured with the sending resource for the SR for the delay information report. In this case, the SR resource information configured by the network side device includes the second configuration information used to indicate at least one sending resource for the SR for the non-delay information report. The network side device does not need to configure the sending resource for the SR dedicated to the delay information report, but the delay information report is reported by reusing the sending resource for the SR for the non-delay information report.
2. The terminal does not support configuration of the first configuration information. Specifically, a protocol does not define configuration signaling for the sending resource for the SR that triggers the delay information report, and the terminal does not support the configuration of the first configuration information. In this case, the SR resource information configured by the network side device includes the second configuration information used to indicate at least one sending resource for the SR for the non-delay information report. The network side device does not need to configure the sending resource for the SR dedicated to the delay information report, but the delay information report is reported by reusing the sending resource for the SR for the non-delay information report.

Optionally, the determining the target sending resource based on the second configuration information includes at least one of the following:
Step (1): The terminal determines the target sending resource based on any sending resource that is for the SR for the non-delay information report and that is indicated by the second configuration information.

Specifically, in a case that the terminal is not configured with the sending resource for the SR dedicated to the delay information report, but the terminal is configured with at least one sending resource for the SR for the non-delay information report, after the delay information report is triggered, in a case that the terminal does not have an available PUSCH resource, the terminal may be allowed to determine the target sending resource for the SR from the at least one sending resource for the SR for the non-delay information report based on any sending resource for the SR for the non-delay information report indicated by the second configuration information, so that the SR for the delay information report can be quickly sent, to prompt the network side device to schedule uplink transmission of the terminal in a timely manner. The network side device may determine, based on the received SR, that the terminal is to report the delay information report. The network side device may quickly allocate a corresponding PUSCH resource accordingly, so that the terminal reports the delay information report as soon as possible, and the network side device obtains the delay information report for the buffered data of the terminal in the timely manner, and schedules the buffered data of the terminal in the timely manner. This can prevent the buffered data of the terminal from being lost due to timeout of the waiting time, and improve transmission performance of the uplink data.

Optionally, in this case, when receiving the SR triggered by reporting of delay information, the network side device cannot precisely determine whether the SR is triggered by the delay information report. However, the network side device may adjust a scheduling priority for the terminal based on a frequency of the SR received from the terminal when scheduling the terminal, to optimize service experience of the terminal. For example, when the network side device receives a first SR from the terminal, the network side device does not allocate an uplink resource for the terminal in a timely manner, but then the terminal triggers sending of another SR, after receiving the SR, the network side device may consider that the terminal has an urgent information transmission requirement and determine to allocate the uplink resource for the terminal as soon as possible.

Step (2): The terminal determines the target sending resource based on a sending resource that is for the SR for the non-delay information report and that is closest to a current time point and indicated by the second configuration information.

Optionally, in a case that the terminal is not configured with the sending resource for the SR dedicated to the delay information report, but the terminal is configured with at least one sending resource for the SR for the non-delay information report, after the delay information report is triggered, in a case that the terminal does not have an available PUSCH resource, the terminal may determine the sending resource that is for the SR for the non-delay information report and that is closest to the current time point from the at least one sending resource for the SR for the non-delay information report based on the sending resource that is for the SR for the non-delay information report and that is closest to the current time point and indicated by the second configuration information, and determine the sending resource that is for the SR for the non-delay information report and that is closest to the current time point as the target sending resource for the SR, so that the SR for the delay information report can be quickly sent. The network side device may determine, based on the received SR, that the terminal is to report the delay information report. The network side device may quickly allocate a corresponding PUSCH resource accordingly, so that the UE reports the delay information report as soon as possible, and the network side device obtains the delay information report for the buffered data of the terminal in the timely manner, and schedules the buffered data of the terminal in the timely manner. This can prevent the buffered data of the terminal from being lost due to timeout of the waiting time, and improve transmission performance of the uplink data.

Optionally, the terminal receives an uplink transmission grant from the network side device; and the terminal sends the delay information report to the network side device based on the uplink transmission grant.

Specifically, after the terminal sends the SR for the delay information report to the network side device on the target sending resource, the network side device allocates the uplink transmission grant to the terminal based on the SR for the delay information report sent by the terminal, and sends the uplink transmission grant to the terminal. The terminal receives the uplink transmission grant sent by the network side device, and may send the delay information report to the network side device based on this uplink transmission grant, so that the network side device obtains the delay information report for the buffered data of the terminal in the timely manner, and schedules the buffered data of the terminal in the timely manner. This can prevent the buffered data of the terminal from being lost due to timeout of the waiting time, and improve transmission performance of the uplink data.

Optionally, a specific implementation of step 402 includes:
In a case that the target sending resource is shared with the SR that triggers the non-delay information report, the terminal sends the SR to the network side device on the target sending resource.

Specifically, the target sending resource is a sending resource for the SR for the delay information report. After the delay information report is triggered, for an SR for the delay information report in a pending (pending) state, in a case that the sending resource for the SR for the delay information report is shared with the sending resource for the SR that triggers the non-delay information report, regardless of whether an SR-prohibit timer (SR-Prohibit Timer) corresponding to the target sending resource is running, the terminal may send the SR to the network side device on the target sending resource, to ensure that the SR for the delay information report is quickly sent, so that the network side device obtains the delay information report for the buffered data of the terminal in the timely manner, and schedules the buffered data of the terminal in the timely manner. This can prevent the buffered data of the terminal from being lost due to timeout of the waiting time, and improve transmission performance of the uplink data.

Optionally, after the specific implementation of step 402 the method further includes at least one of the following:
(a) In a case that an SR-prohibit timer corresponding to the target sending resource is running, the terminal restarts the SR-prohibit timer.
   Specifically, in a case that the SR-prohibit timer corresponding to the target sending resource is running, the terminal may restart the SR-prohibit timer, so that the SR-prohibit timer starts timing anew. During a period when the SR-prohibit timer starts timing anew, sending of the SR triggered by the regular BSR is prevented.
(b) In a case that an SR-prohibit timer corresponding to the target sending resource is not running, the terminal starts the SR-prohibit timer.
   Specifically, in the case that the SR-prohibit timer corresponding to the target sending resource is not running, the terminal may start the SR-prohibit timer, so that the SR-prohibit timer enters running, and sending of the SR triggered by the regular BSR is prevented.
(c) In a case that the SR for the delay information report has been sent at least once and is not canceled, the terminal sends the SR to the network side device after the SR-prohibit timer expires.

Specifically, in the case that the SR for the delay information report has been sent at least once and is not canceled, that is, the SR for the delay information report is sent to the network side device once, and the SR-prohibit timer is running, because the network side device does not send the transmission grant to the terminal in a timely manner, the terminal does not cancel the SR for the delay information report. In a case that the terminal needs to send the SR for the delay information report to the network side device subsequently, the terminal may send the SR for the delay information report to the network side device after the SR-prohibit timer expires. Advantages of this approach lie in preventing initial sending of the pending SR for reporting the delay information report from being blocked by running of the SR-prohibit timer, and also preventing frequent sending of the pending SR for reporting the delay information report.

Optionally, after the terminal sends the delay information report to the network side device, the terminal cancels all SRs for delay information reports in a pending state, and stops the SR-prohibit timer.

Specifically, after the terminal sends the delay information report to the network side device, the terminal may cancel all the SRs for the delay information reports in the pending state, and stop the SR-prohibit timer, so that the SR-prohibit timer is not running, and sending of the SR triggered by the regular BSR is further enabled, to improve sending performance of uplink data.

Optionally, the SR resource information includes duration of a delay SR-prohibit timer.

Specifically, in addition to the existing SR-prohibit timer (SR-Prohibit Timer), a new timer is introduced in the SR resource information. The timer may be referred to as the delay SR-prohibit timer (Delay Scheduling Request Prohibit Timer, DSR-Prohibit Timer), and the SR resource information includes the duration of the delay SR-prohibit timer. The delay SR-prohibit timer is used to prevent frequent sending of the SR for the delay information report.

Optionally, the specific implementation of step 402 further includes:
In a case that the target sending resource is shared with the SR that triggers the non-delay information report, and the delay SR-prohibit timer is not running or has expired, the terminal sends the SR to the network side device on the target sending resource.

Specifically, after the delay information report is triggered, there is an SR for the delay information report in a pending (pending) state. In a case that the sending resource for the SR that triggers the delay information report is shared with the sending resource for the SR that triggers the non-delay information report, and the delay SR-prohibit timer is not running or has expired, the terminal may send the SR to the network side device on the target sending resource, to ensure that the SR for reporting the delay information report is quickly sent, so that the network side device obtains the delay information report for the buffered data of the terminal in the timely manner, and schedules the buffered data of the terminal in the timely manner. This can prevent the buffered data of the terminal from being lost due to timeout of the waiting time. In this way, the DSR-prohibit timer is used to prevent frequent sending of the SR for the delay information report, and the SR-prohibit timer is used to prevent frequent sending of the SR triggered by the regular BSR. Sending of the SR for the delay information report does not prevent sending of the SR triggered by the regular BSR, and sending of the SR triggered by the regular BSR does not prevent sending of the SR for the delay information report.

Optionally, after the terminal sends the SR to the network side device on the target sending resource, the terminal starts the delay SR-prohibit timer.

Specifically, after the terminal sends the SR for the delay information report to the network side device on the target sending resource, the terminal may start the delay SR-prohibit timer, so that the delay SR-prohibit timer is running, to prevent frequent sending of the SR for the delay information report.

Optionally, after the terminal sends the delay information report to the network side device, the terminal cancels all SRs for delay information reports in a pending state, and stops the delay SR-prohibit timer.

Specifically, after the terminal sends the delay information report to the network side device, the terminal may cancel all the SRs for the delay information reports in the pending state, and stop the delay SR-prohibit timer, so that the delay SR-prohibit timer is not running, and sending of the SR triggered by the regular BSR is further enabled, to improve sending performance of uplink data.

Optionally, the SR resource information includes status information, and the status information is used to indicate that sending of the SR for the delay information report is allowed or prohibited.

Specifically, the status information is introduced in the SR resource configuration. The status information is used to indicate that sending of the SR for the delay information report is allowed or prohibited. For example, the status information is a grant state bit or a prohibition state bit for sending of the SR. An initial state indication of the grant state or prohibition state bit is that sending of the SR for the delay information report is allowed. When the SR for reporting the delay information report is triggered, in a case that the grant state or prohibition state bit indicates that sending of the SR corresponding to the delay information report is allowed, the SR for the delay information report is sent by using the corresponding sending resource for the SR.

Optionally, the specific implementation of step 402 further includes:
In a case that the target sending resource is shared with the SR that triggers the non-delay information report, and the status information is used to indicate that sending of the SR for the delay information report is allowed, the terminal sends the SR to the network side device on the target sending resource.

Specifically, after the delay information report is triggered, there is an SR for the delay information report in a pending (pending) state. In a case that the sending resource for the SR that triggers the delay information report is shared with the sending resource for the SR that triggers the non-delay information report, and the status information is used to indicate that sending of the SR for the delay information report is allowed, the terminal may send the SR for the delay information report to the network side device on the target sending resource, to ensure that the SR for reporting the delay information report is quickly sent, so that the network side device obtains the delay information report for the buffered data of the terminal in the timely manner, and schedules the buffered data of the terminal in the timely manner. This can prevent the buffered data of the terminal from being lost due to timeout of the waiting time, to improve transmission performance of the uplink data.

Optionally, in a case that the target sending resource is shared with the resource for the SR that triggers the non-delay information report, and the status information is used to indicate that sending of the SR for the delay information report is prohibited, the terminal can send the SR for the delay information report on the target sending resource only when the terminal needs to wait until the status information is set to indicate sending of the SR for the delay information report is allowed.

Optionally, after the terminal sends the SR to the network side device on the target sending resource, the method further includes:
(a) The terminal sets the status information to indicate that sending of the SR for the delay information report is prohibited, and starting or restarting an SR-prohibit timer corresponding to the target sending resource.
   Specifically, after the terminal sends the SR for the delay information report to the network side device on the target sending resource, the terminal may start or restart the SR-prohibit timer corresponding to the target sending resource, so that the SR-prohibit timer is running, to prevent frequent sending of the SR for the delay information report.
(b) In a case that the SR-prohibit timer expires, the terminal sets the status information to indicate that sending of the SR for the delay information report is allowed.

Specifically, after the terminal sends the SR for the delay information report to the network side device on the target sending resource, in the case that the SR-prohibit timer expires, the terminal may set the status information to indicate that sending of the SR for the delay information report is allowed, which is helpful for subsequent sending of the SR for the delay information report.

Optionally, after the terminal sends the delay information report to the network side device, the terminal stops the SR-prohibit timer, and sets the status information to indicate that sending of the SR for the delay information report is allowed.

Specifically, after the terminal sends the delay information report to the network side device, the terminal may stop the SR-prohibit timer, so that the SR-prohibit timer is not running, and set the status information to indicate that sending of the SR for the delay information report is allowed, which is helpful for subsequent sending of the SR for the delay information report.

FIG. 5 is a second schematic flowchart of a method for sending a scheduling request SR for a delay information report according to an embodiment of this application. As shown in FIG. 5, the method includes step 501 to step 503.

Step 501: A network side device configures SR resource information corresponding to a terminal, where the SR resource information is used by the terminal to determine a target sending resource for an SR based on the SR resource information in a case that the terminal determines that a delay information report is triggered, and the SR is triggered by reporting the delay information report.

Specifically, the network side device configures the SR resource information for the terminal. The SR resource information includes at least one of the following: first configuration information, used to indicate at least one sending resource for the SR; and second configuration information, used to indicate at least one sending resource for an SR for a non-delay information report. Therefore, in a case that the terminal determines that the delay information report is triggered, the terminal determines the target sending resource for the SR for the delay information report based on the first configuration information or the second configuration information configured by the network side device.

Optionally, the delay information report includes any one of the following:
a. delay information of at least one logical channel (Logical Channel, LCH) or at least one logical channel group (Logical Channel Group, LCG); and
b. buffer information of at least one LCH or at least one LCG, and delay information corresponding to the buffer information.

Optionally, the delay information report is sent via a MAC control element CE.

Step 502: The network side device sends the SR resource information to the terminal.

Specifically, after the network side device configures the SR resource information for the terminal, the network side device may send the SR resource information to the terminal. The terminal receives the SR resource information sent by the network side device, may determine the target sending resource for the SR based on the SR resource information, and send the SR to the network side device on the target sending resource.

Step 503: The network side device receives the SR sent by the terminal.

Specifically, the network side device may receive the SR sent by the terminal, so that the network side device obtains a delay information report of buffered data of the terminal in a timely manner, and schedules the buffered data of the terminal in a timely manner, to prevent the buffered data of the terminal from being lost due to timeout of waiting time.

In the method for sending the scheduling request SR for the delay information report provided in this embodiment of this application, the network side device configures the SR resource information corresponding to the terminal, where the SR resource information is used by the terminal to determine the target sending resource for the SR based on the SR resource information in the case that the terminal determines that the delay information report is triggered, and the SR is triggered by reporting the delay information report; and the network side device sends the SR resource information to the terminal. Because the SR resource information includes at least one of the following: the first configuration information, used to indicate the at least one sending resource for the SR; and the second configuration information, used to indicate the at least one sending resource for the SR for the non-delay information report, the terminal may determine the target sending resource based on any one of the first configuration information and the second configuration information, so that the terminal can send the SR to the network side device on the target sending resource. The network side device receives the SR for the delay information report sent by the terminal, so that the network side device obtains the delay information report for the buffered data of the terminal in the timely manner, and schedules the buffered data of the terminal in the timely manner. This can prevent the buffered data of the terminal from being lost due to timeout of the waiting time, to improve transmission performance of uplink data.

Optionally, the first configuration information meets at least one of the following:
(1) One medium access control MAC entity of the terminal corresponds to one sending resource for the SR.

Specifically, one sending resource for the SR used to trigger the delay information report may be configured for one MAC entity of the terminal, and is used to send the SR for the delay information report. Usually, one terminal has only one delay emergency service. Therefore, it is sufficient for the network side device to configure, based on the MAC entity, the sending resource for the SR used to trigger the delay information report. In a case that one terminal has more than one delay emergency service, delay information reports of the multiple delay emergency services may share one sending resource for the SR to reduce sending resource overheads of the SR.

(2) One wireless link of the terminal corresponds to one sending resource for the SR.

Specifically, one sending resource for the SR used to trigger the delay information report may be configured for one wireless link of the terminal, and is used to send the SR for the delay information report. In a case that one MAC entity of the terminal has more than one wireless link, the network side device may configure one sending resource for the SR for each wireless link, used to send the SR for the delay information report of each wireless link. For example, a MAC entity of remote UE (remote UE) may have a direct wireless link with the network side device and an indirect wireless link established with the network side device through relay UE (U2N relay UE). Then, the network side device may configure, for the MAC entity of the remote UE, one sending resource for the SR for sending the delay information report on the direct wireless link and another sending resource for the SR for sending the delay information report on the indirect wireless link. The two sending resources for the SR, namely, the sending resource for the SR for sending the delay information report on the direct wireless link and the sending resource for the SR for sending the delay information report on the indirect wireless link, may be the same or different, which depends on configuration of the network side device.

(3) One logical channel (Logical Channel, LCH) of the terminal corresponds to one sending resource for the SR.

Specifically, one sending resource for the SR used to trigger the delay information report may be configured for one LCH of the terminal. In this way, after receiving an SR for the delay information report, the network side device may determine a logical channel that triggers the delay information report, so that the network side device determines to schedule a time-frequency resource allocation parameter, a modulation and coding scheme (Modulation and Coding Scheme, MCS) parameter, and the like of a physical uplink shared channel (Physical Uplink Shared Channel, PUSCH) that matches a transmission quality requirement of the logical channel. To achieve this objective, when one terminal has multiple logical channels that trigger the delay information report, the terminal needs to occupy sending resources that are for the SR for the delay information report and that are configured for multiple different logical channels.

Optionally, a specific implementation of step 501 includes at least one of the following:
(1) The network side device configures, based on a medium access control MAC entity of the terminal, the SR resource information corresponding to the terminal.

Specifically, one sending resource for the SR for the delay information report may be configured for one MAC entity of the terminal, and is used to send the SR for the delay information report. Therefore, the network side device may configure, based on the MAC entity of the terminal, the SR resource information corresponding to the terminal.

(2) The network side device configures, based on a wireless link of the terminal, the SR resource information corresponding to the terminal.

Specifically, one sending resource for the SR for the delay information report may be configured for one wireless link of the terminal, and is used to send the SR for the delay information report. Therefore, the network side device may configure, based on the wireless link of the terminal, the SR resource information corresponding to the terminal.

(3) The network side device configures, based on a logical channel LCH of the terminal, the SR resource information corresponding to the terminal.

Specifically, one sending resource for the SR for the delay information report may be configured for one LCH of the terminal, and is used to send the SR for the delay information report. Therefore, the network side device may configure, based on the LCH of the terminal, the SR resource information corresponding to the terminal.

Optionally, the network side device sends an uplink transmission grant to the terminal; and the network side device receives the delay information report sent by the terminal.

Specifically, after the network side device receives the SR for the delay information report sent by the terminal, the network side device may send the uplink transmission grant to the terminal based on the SR for the delay information report. After receiving the uplink transmission grant sent by the network side device, the terminal sends the delay information report to the network side device, so that the network side device can receive the delay information report sent by the terminal, and schedule the buffered data of the terminal in the timely manner. This can prevent the buffered data of the terminal from being lost due to timeout of the waiting time, and improve transmission performance of the uplink data.

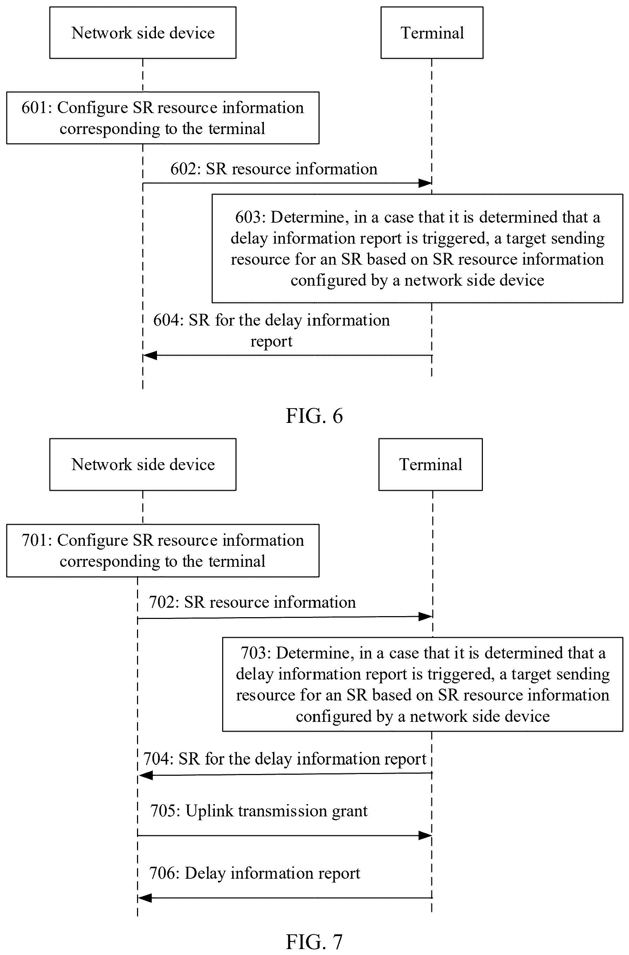

FIG. 6 is a first schematic diagram of interaction between a terminal and a network side device according to an embodiment of this application. As shown in FIG. 6, the method includes step 601 to step 604.

Step 601: A network side device configures SR resource information corresponding to a terminal. The SR resource information is used by the terminal to determine a target sending resource for an SR based on the SR resource information in a case that the terminal determines that a delay information report is triggered, and the SR is triggered by reporting the delay information report. The SR resource information includes at least one of the following: first configuration information, used to indicate at least one sending resource for the SR; and second configuration information, used to indicate at least one sending resource for an SR for a non-delay information report.

Step 602: The network side device sends the SR resource information to the terminal.

Step 603: The terminal determines, in the case that the terminal determines that the delay information report is triggered, the target sending resource for the SR based on the SR resource information configured by the network side device.

Step 604: The terminal sends the SR for the delay information report to the network side device on the target sending resource.

FIG. 7 is a second schematic diagram of interaction between a terminal and a network side device according to an embodiment of this application. As shown in FIG. 7, the method includes step 701 to step 706.

Step 701: A network side device configures SR resource information corresponding to a terminal. The SR resource information is used by the terminal to determine a target sending resource for an SR based on the SR resource information in a case that the terminal determines that a delay information report is triggered, and the SR is triggered by reporting the delay information report. The SR resource information includes at least one of the following: first configuration information, used to indicate at least one sending resource for the SR; and second configuration information, used to indicate at least one sending resource for an SR for a non-delay information report.

Step 702: The network side device sends the SR resource information to the terminal.

Step 703: The terminal determines, in the case that the terminal determines that the delay information report is triggered, the target sending resource for the SR based on the SR resource information configured by the network side device.

Step 704: The terminal sends the SR to the network side device on the target sending resource.

Step 705: After receiving the SR sent by the terminal, the network side device sends an uplink transmission grant to the terminal based on the SR.

Step 706: After receiving the uplink transmission grant sent by the network side device, the terminal sends the delay information report to the network side device based on the uplink transmission grant.

The method for sending the scheduling request SR for the delay information report provided in the embodiments of this application is further described below by using specific embodiments.

### Embodiment 1: A network side device configures SR resource information corresponding to a terminal

a. A sending resource for an SR for a delay information report is configured by the network side device based on a MAC entity of the terminal. One sending resource for the SR for the delay information report may be configured for one MAC entity of the terminal, and is used to send the SR for the delay information report. Usually, one terminal has only one delay emergency service. Therefore, it is sufficient for the network side device to configure, based on the MAC entity, the sending resource for the SR for the delay information report. In a case that one terminal has more than one delay emergency service, delay information reports of the multiple delay emergency services may share one sending resource for the SR to reduce sending resource overheads of the SR.
b. A sending resource for an SR for a delay information report is configured by the network side device for a wireless link of the terminal. One sending resource for the SR for the delay information report may be configured for one wireless link of the terminal, and is used to send the SR triggered by the delay information. In a case that one MAC entity of the terminal has more than one wireless link, the network side device may configure one sending resource for the SR for each wireless link, used to send the SR for the delay information report over each wireless link respectively.

For example, a MAC entity of remote UE (remote UE) may have a direct wireless link with the network side device and an indirect wireless link established with the network side device through relay UE (U2N relay UE). Then, the network side device may configure, for the MAC entity of the remote UE, one sending resource for the SR for sending the delay information report on the direct wireless link and another sending resource for the SR for sending the delay information report on the indirect wireless link. The two sending resources for the SR, namely, the sending resource for the SR for sending the delay information report on the direct wireless link and the sending resource for the SR for sending the delay information report on the indirect wireless link, may be the same or different, which depends on configuration of the network side device.

c. A sending resource for an SR for a delay information report is configured by the network side device based on an LCH of the terminal. One sending resource for the SR for the delay information report may be configured for one LCH of the terminal. In this way, after receiving an SR for the delay information report, the network side device may determine a logical channel that triggers the delay information report, so that the network side device determines to schedule a time-frequency resource allocation parameter, an MCS parameter, and the like of a PUSCH that matches a transmission quality requirement of the logical channel. To achieve this objective, when one terminal has multiple logical channels that trigger the delay information report, the terminal needs to occupy sending resources that are for the SR for the delay information report and that are configured for multiple different logical channels.

### Embodiment 2: A terminal determines a target sending resource for an SR used to trigger a delay information report

(1) When the terminal (for example, the network side device configures the sending resource for the SR used to trigger the delay information report based on a MAC entity of the terminal) is configured with a sending resource for the SR used to trigger the delay information report, after the delay information report is triggered, in a case that the terminal does not have an available uplink PUSCH resource, the terminal sends the SR by using the sending resource for the SR for the delay information report; and the network side device may determine, based on the received SR, that the terminal is to report the delay information report, and the network side device may accordingly quickly allocate a corresponding PUSCH resource, so that the terminal reports the delay information report as soon as possible.
(2) When the terminal is not explicitly configured with an SR resource used to trigger reporting of the delay information, and does not have an available uplink PUSCH resource, the terminal sends the SR for the delay information report by using any sending resource for an SR for a non-delay information report configured by the network side device for the terminal, that is, when the network side device does not configure the sending resource for the SR dedicated to triggering the delay information report, the terminal is allowed to send the SR for the delay information report by using another SR resource configured for that terminal, to prompt the network side device to schedule uplink transmission of the terminal in a timely manner.

In this case, when receiving the SR for the delay information report, the network side device cannot precisely determine whether the SR is triggered by reporting the delay information report. However, when scheduling the terminal, the network side device may adjust a scheduling priority for the terminal based on a frequency of the SR received from the terminal, to optimize service experience of the terminal. For example, when the network side device receives a first SR from the terminal, the network side device does not allocate an uplink resource for the terminal in a timely manner, but then the terminal triggers sending of another SR, after receiving sending of the SR, the network side device may consider that the terminal has an urgent information transmission requirement and determine to allocate the uplink resource for the terminal as soon as possible. Advantages of this approach are that the network side device does not need to configure the SR resource dedicated to the delay information report, and the SR resource for other information reporting is reused for the delay information report.

(3) In a case that the terminal does not have an available uplink PUSCH resource, the terminal sends the SR triggered by delay information by using any SR resource configured by the network side device for the terminal. For the purpose of saving the SR resource, a protocol may not define signaling for configuring the SR resource dedicated to the delay information report. Advantages of this approach are that the network side device does not need to configure the SR resource dedicated to the delay information report, and the SR resource for other information reporting is reused for the delay information report.

(4) In a case that the terminal does not have an available uplink PUSCH resource, the terminal sends the SR triggered by delay information by using another SR resource that is closest to a current time point; and the terminal selects the closest SR resource to ensure that the SR triggered by the delay information is sent as soon as possible.

It should be noted that the delay information report may include delay information of at least one LCH or LCG, or may include buffer information of at least one LCH or LCG and corresponding delay information; and the delay information report is sent via a MAC CE.

### Embodiment 3: A target sending resource determined by the terminal is shared with an SR that triggers a non-delay information report

Case 1: For the SR for the delay information report in a pending state, regardless of whether an SR-prohibit timer corresponding to the determined target sending resource is running, the terminal may send the SR for the delay information report to the network side device on the target sending resource.

In this case, in a case that the SR-prohibit timer corresponding to the target sending resource is running, the terminal may restart the SR-prohibit timer; or in a case that the SR-prohibit timer corresponding to the target sending resource is not running, the terminal may start the SR-prohibit timer; or in a case that the SR for the delay information report has been sent at least once and is not canceled, that is, there is a subsequent sending requirement, the terminal can send the SR for the delay information report to the network side device only after the SR-prohibit timer expires.

Advantages of this approach lie in preventing initial sending of the pending SR for reporting the delay information report from being blocked by running of the SR-prohibit timer, and also preventing frequent sending of the pending SR for the delay information report. Further, an SR resource configuration in a related technology may be reused, to avoid signaling modification. Sending of the SR triggered by the delay information report affects sending of the SR triggered by the regular BSR. For example, after the SR for the delay information report is sent, the SR-prohibit timer is started. During running of the SR-prohibit timer, the terminal prevents sending of the SR triggered by the regular BSR.

Further, the terminal receives the PUSCH resource sent by the network side device, and the terminal sends the delay information report to the network side device. After the terminal sends the delay information report to the network side device, the terminal cancels all SRs for delay information reports in the pending state, and stops the SR-prohibit timer.

Case 2: In addition to the existing SR-prohibit timer, a new timer is introduced in the SR resource configuration. The timer may be referred to as a delay SR-prohibit timer (such as Delay Scheduling Request Prohibit Timer, DSR-Prohibit Timer). For the SR for the delay information report in the pending state, in a case that the DSR-prohibit timer is not running or has expired, the terminal sends the SR for the delay information report by using the target sending resource, and starts the DSR-prohibit timer. In this way, the DSR-prohibit timer is used to prevent frequent sending of the SR for the delay information report, and the SR-prohibit timer is used to prevent frequent sending of the SR triggered by the regular BSR. Sending of the SR for the delay information report does not prevent sending of the SR triggered by the regular BSR, and sending of the SR triggered by the regular BSR does not prevent sending of the SR for the delay information report.

Optionally, the terminal receives the PUSCH resource sent by the network side device, and the terminal sends the delay information report to the network side device. After the terminal sends the delay information report to the network side device, the terminal cancels all SRs for delay information reports in the pending state, and stops the delay SR-prohibit timer.

Case 3: Compared with Case 2, no delay SR-prohibit timer is introduced, status information is introduced in the SR resource configuration. The status information is used to indicate that sending of the SR for the delay information report is allowed or prohibited, that is, a grant state or prohibition state bit for sending of the SR. An initial state indication of the grant state or prohibition state bit is that sending of the SR for the delay information report is allowed.

After the SR for reporting the delay information report is triggered, in a case that the grant state or prohibition state bit indicates that sending of the SR for the delay information report is allowed, the terminal sends the SR for the delay information report by using the target sending resource. After the SR is sent, the terminal sets the grant state or prohibition state bit to a state of prohibiting sending of the SR for the delay information report, and starts the SR-prohibit timer. In a case that the grant state or prohibition state bit indicates that sending of the SR for the delay information report is prohibited, the terminal needs to wait until the grant state or prohibition state bit changes to allowing sending of the SR for the delay information report, and then sends the SR for the delay information report by using the target sending resource. When the SR-prohibit timer expires, the terminal sets the grant state or prohibition state bit to a state of allowing sending of the SR for the delay information report.

Further, the terminal receives the PUSCH resource sent by the network side device, and the terminal sends the delay information report to the network side device. After the terminal sends the delay information report to the network side device, the terminal cancels all SRs for delay information reports in a pending state, stops the SR-prohibit timer, and sets the grant state or prohibition state bit to the state of allowing sending of the SR for the delay information report.

The method for sending the scheduling request SR for the delay information report provided in the embodiments of this application may be performed by an apparatus for sending a scheduling request SR for a delay information report. In the embodiments of this application, an example in which the apparatus for sending the scheduling request SR for the delay information report performs the method for sending the scheduling request SR for the delay information report is used to describe the apparatus for sending the scheduling request SR for the delay information report provided in the embodiments of this application.

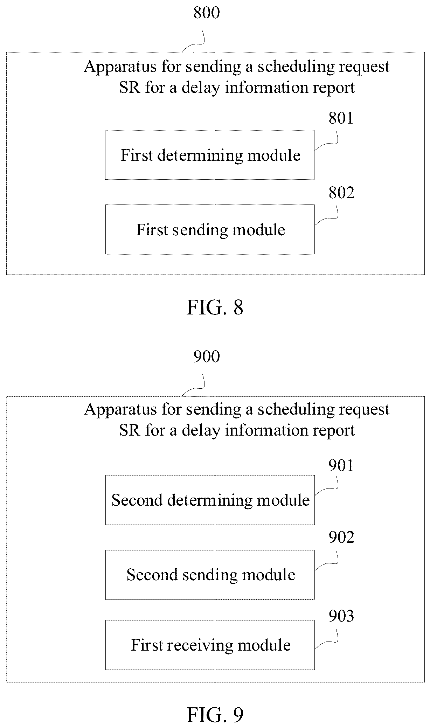

FIG. 8 is a first schematic diagram of a structure of an apparatus for sending a scheduling request SR for a delay information report according to an embodiment of this application. As shown in FIG. 8, the apparatus 800 for sending the scheduling request SR for the delay information report includes a first determining module 801 and a first sending module 802.

The first determining module 801 is configured to determine, in a case that the apparatus determines that a delay information report is triggered, a target sending resource for an SR based on SR resource information configured by a network side device, where the SR is triggered by reporting the delay information report.

The first sending module 802 is configured to send the SR to the network side device on the target sending resource, where
the SR resource information includes at least one of the following:
first configuration information, used to indicate at least one sending resource for the SR; and
second configuration information, used to indicate at least one sending resource for an SR for a non-delay information report.

The apparatus for sending the scheduling request SR for the delay information report provided in this embodiment of this application determines, in the case that the apparatus determines that the delay information report is triggered, the target sending resource for the SR based on the SR resource information configured by the network side device. Because the SR resource information includes at least one of the following: the first configuration information, used to indicate at least one sending resource for the SR; and the second configuration information, used to indicate the at least one sending resource for the SR for the non-delay information report, the apparatus may determine the target sending resource based on any one of the first configuration information and the second configuration information, and then send the SR for the delay information report to the network side device on the target sending resource. Therefore, the network side device obtains a delay information report for buffered data in a timely manner, and schedule the buffered data in a timely manner. This can prevent the buffered data from being lost due to timeout of the waiting time, to improve transmission performance of uplink data.

Optionally, the first configuration information meets at least one of the following:
one medium access control MAC entity of the terminal corresponds to one sending resource for the SR;
one wireless link of the terminal corresponds to one sending resource for the SR; and
one logical channel LCH of the terminal corresponds to one sending resource for the SR.

Optionally, the first determining module 801 is specifically configured to perform at least one of the following:
in a case that it is determined that the delay information report is triggered, and the SR resource information includes the first configuration information, determining the target sending resource based on the first configuration information; and
in a case that it is determined that the delay information report is triggered, and the SR resource information includes the second configuration information, determining the target sending resource based on the second configuration information.

Optionally, that the SR resource information includes the second configuration information includes any one of the following:
the network side device is not configured with the first configuration information; and
the terminal does not support configuration of the first configuration information.

Optionally, the first determining module 801 is specifically configured to perform at least one of the following:
determining the target sending resource based on any sending resource that is for the SR for the non-delay information report and that is indicated by the second configuration information; and
determining the target sending resource based on a sending resource that is for the SR for the non-delay information report and that is closest to a current time point and indicated by the second configuration information.

Optionally, the apparatus 800 for sending the scheduling request SR for the delay information report further includes:
a second receiving module, configured to receive the SR resource information from the network side device.

Optionally, the apparatus 800 for sending the scheduling request SR for the delay information report further includes:
a third receiving module, configured to receive an uplink transmission grant from the network side device; and
a third sending module, configured to send the delay information report to the network side device based on the uplink transmission grant.

Optionally, the delay information report includes any one of the following:
delay information of at least one LCH or at least one logical channel group LCG; and
buffer information of at least one LCH or at least one LCG, and delay information corresponding to the buffer information.

Optionally, the delay information report is sent via a MAC control element CE.

Optionally, the first sending module 802 is specifically configured to:
in a case that the target sending resource is shared with the SR that triggers the non-delay information report, send the SR to the network side device on the target sending resource.

Optionally, the apparatus 800 for sending the scheduling request SR for the delay information report further includes at least one of the following:
a restart module, configured to: in a case that an SR-prohibit timer corresponding to the target sending resource is running, restart the SR-prohibit timer;
a first start module, configured to: in a case that an SR-prohibit timer corresponding to the target sending resource is not running, start the SR-prohibit timer; and
a fourth sending module, configured to: in a case that the SR for the delay information report has been sent at least once and is not canceled, send the SR for the delay information report to the network side device after the SR-prohibit timer expires.

Optionally, the apparatus 800 for sending the scheduling request SR for the delay information report further includes:
after the terminal sends the delay information report to the network side device, cancel all SRs for delay information reports in a pending state, and stop the SR-prohibit timer.

Optionally, the SR resource information includes duration of a delay SR-prohibit timer.

Optionally, the first sending module 802 is specifically configured to:
in a case that the target sending resource is shared with the SR that triggers the non-delay information report, and the delay SR-prohibit timer is not running or has expired, send the SR to the network side device on the target sending resource.

Optionally, the apparatus 800 for sending the scheduling request SR for the delay information report further includes:
a second start module, configured to start the delay SR-prohibit timer.

Optionally, the apparatus 800 for sending the scheduling request SR for the delay information report further includes:
a first stop module, configured to: after the terminal sends the delay information report to the network side device, cancel all SRs for delay information reports in a pending state, and stop the delay SR-prohibit timer.

Optionally, the SR resource information includes status information, and the status information is used to indicate that sending of the SR for the delay information report is allowed or prohibited.

Optionally, the first sending module 802 is specifically configured to:
in a case that the target sending resource is shared with the SR that triggers the non-delay information report, and the status information is used to indicate that sending of the SR for the delay information report is allowed, send the SR to the network side device on the target sending resource.

Optionally, the apparatus 800 for sending the scheduling request SR for the delay information report further includes:
a third start module, configured to: set the status information to indicate that sending of the SR for the delay information report is prohibited, and start or restart an SR-prohibit timer corresponding to the target sending resource; and
a setting module, configured to: in a case that the SR-prohibit timer expires, set the status information to indicate that sending of the SR for the delay information report is allowed.

Optionally, the apparatus 800 for sending the scheduling request SR for the delay information report further includes:
a second stop module, configured to: after the terminal sends the delay information report to the network side device, stop the SR-prohibit timer, and set the status information to indicate that sending of the SR for the delay information report is allowed.

FIG. 9 is a second schematic diagram of a structure of an apparatus for sending a scheduling request SR for a delay information report according to an embodiment of this application. As shown in FIG. 9, the apparatus 900 for sending the scheduling request SR for the delay information report includes a second determining module 901, a second sending module 902, and a first receiving module 903.

The second determining module 901 is configured to configure SR resource information corresponding to a terminal, where the SR resource information is used by the terminal to determine a target sending resource for an SR based on the SR resource information in a case that the terminal determines that a delay information report is triggered, and the SR is triggered by reporting the delay information report.

The second sending module 902 is configured to send the SR resource information to the terminal.

The first receiving module 903 is configured to receive the SR sent by the terminal, where
the SR resource information includes at least one of the following:
first configuration information, used to indicate at least one sending resource for the SR; and
second configuration information, used to indicate at least one sending resource for an SR for a non-delay information report.

The apparatus for sending the scheduling request SR for the delay information report provided in this embodiment of this application configures the SR resource information corresponding to the terminal, where the SR resource information is used by the terminal to determine the target sending resource for the SR based on the SR resource information in the case that the terminal determines that the delay information report is triggered, and the SR is triggered by reporting the delay information report; and sends the SR resource information to the terminal. Because the SR resource information includes at least one of the following: the first configuration information, used to indicate the at least one sending resource for the SR; and the second configuration information, used to indicate the at least one sending resource for the SR for the non-delay information report, the terminal may determine the target sending resource based on any one of the first configuration information and the second configuration information, so that the terminal can send the SR for the delay information report on the target sending resource. The apparatus receives the SR for the delay information report sent by the terminal, and then can obtain a delay information report for buffered data of the terminal in a timely manner, and schedule the buffered data of the terminal in a timely manner. This can prevent the buffered data of the terminal from being lost due to timeout of the waiting time, to improve transmission performance of uplink data.

Optionally, the second determining module 901 is specifically configured to perform at least one of the following:
configuring, based on a medium access control MAC entity of the terminal, the SR resource information corresponding to the terminal;
configuring, based on a wireless link of the terminal, the SR resource information corresponding to the terminal; and
configuring, based on a logical channel LCH of the terminal, the SR resource information corresponding to the terminal.

Optionally, the first configuration information meets at least one of the following:
one MAC entity of the terminal corresponds to one sending resource for the SR;
one wireless link of the terminal corresponds to one sending resource for the SR; and
one LCH of the terminal corresponds to one sending resource for the SR.

Optionally, the apparatus 900 for sending the scheduling request SR for the delay information report further includes:
a fifth sending module, configured to send an uplink transmission grant to the terminal; and
a fourth receiving module, configured to receive the delay information report sent by the terminal.

Optionally, the delay information report includes any one of the following:
delay information of at least one LCH or at least one logical channel group LCG; and
buffer information of at least one LCH or at least one LCG, and delay information corresponding to the buffer information.

Optionally, the delay information report is sent via a MAC control element CE.

The apparatus for sending the scheduling request SR for the delay information report in this embodiment of this application may be an electronic device, for example, an electronic device with an operating system, or may be a component in the electronic device, for example, an integrated circuit or a chip. The electronic device may be a terminal, or another device other than the terminal. For example, the terminal may include but is not limited to the foregoing listed types of the terminal 11, and the another device may be a server, a network attached storage (Network Attached Storage, NAS), or the like. This is not specifically limited in this embodiment of this application.

The apparatus for sending the scheduling request SR for the delay information report provided in this embodiment of this application can implement the processes implemented in the method embodiment of FIG. 4 to FIG. 7, and achieve a same technical effect. To avoid repetition, details are not described herein again.

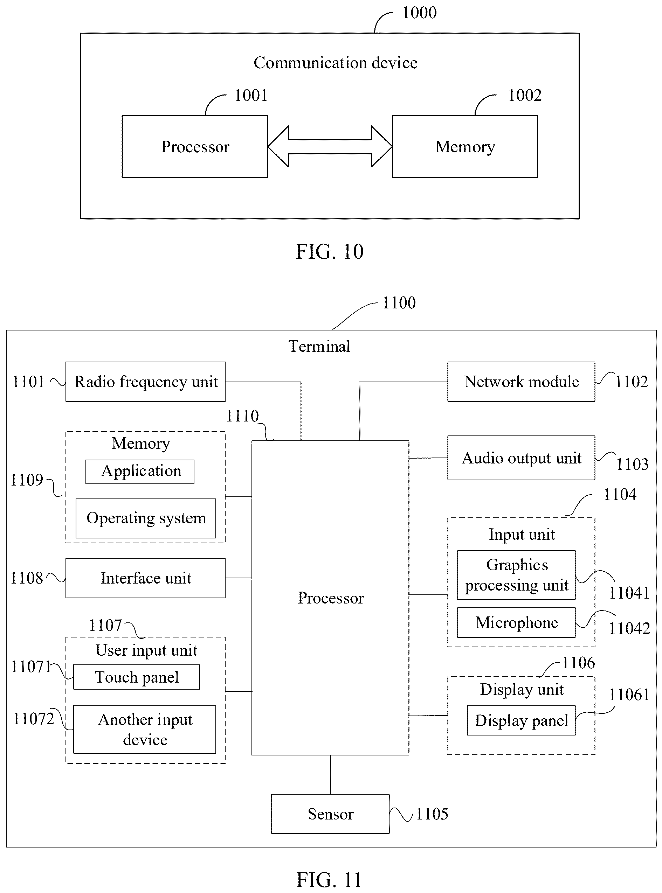

As shown in FIG. 10, an embodiment of this application further provides a communication device 1000, including a processor 1001 and a memory 1002. The memory 1002 stores a program or an instruction that is executable on the processor 1001. For example, in a case that the communication device 1000 is a terminal, the program or the instruction is executed by the processor 1001 to implement the steps of the embodiment of the method for sending the scheduling request SR for the delay information report, and a same technical effect can be achieved. In a case that the communication device 1000 is a network side device, the program or the instruction is executed by the processor 1001 to implement the steps of the embodiment of the method for sending the scheduling request SR for the delay information report, and a same technical effect can be achieved. To avoid repetition, details are not described herein again.

An embodiment of this application further provides a terminal, including a processor and a communication interface. The communication interface is coupled to the processor, and the processor is configured to run a program or an instruction to implement the steps in the method embodiment shown in FIG. 4. The terminal embodiment is corresponding to the method embodiment on the terminal side, each implementation process and implementation of the method embodiment can be applied to the terminal embodiment, and a same technical effect can be achieved. Specifically, FIG. 11 is a schematic diagram of a hardware structure of a terminal according to an embodiment of this application.

The terminal 1100 includes but is not limited to at least a part of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art can understand that the terminal 1100 may further include a power supply (such as a battery) that supplies power to each component. The power supply may be logically connected to the processor 1110 by using a power supply management system, to implement functions such as charging and discharging management, and power consumption management by using the power supply management system. The terminal structure shown in FIG. 11 constitutes no limitation on the terminal, and the terminal may include more or fewer components than those shown in the figure, or combine some components, or have different component arrangements. Details are not described herein.

It should be understood that in this embodiment of this application, the input unit 1104 may include a graphics processing unit (Graphics Processing Unit, GPU) 11041 and a microphone 11042. The graphics processing unit 11041 processes image data of a static picture or a video obtained by an image capture apparatus (for example, a camera) in a video capture mode or an image capture mode. The display unit 1106 may include a display panel 11061, and the display panel 11061 may be configured in a form of a liquid crystal display, an organic light-emitting diode, or the like. The user input unit 1107 includes at least one of a touch panel 11071 and another input device 11072. The touch panel 11071 is also referred to as a touchscreen. The touch panel 11071 may include two parts: a touch detection apparatus and a touch controller. The another input device 11072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 1101 may transmit the downlink data to the processor 1110 for processing. In addition, the radio frequency unit 1101 may send uplink data to the network side device. Generally, the radio frequency unit 1101 includes but is not limited to an antenna, an amplifier, a transceiver, a coupler, a low noise amplifier, a duplexer, and the like.

The memory 1109 may be configured to store a software program or an instruction and various data. The memory 1109 may mainly include a first storage area for storing a program or an instruction and a second storage area for storing data. The first storage area may store an operating system, and an application or an instruction required by at least one function (for example, a sound playing function or an image playing function). In addition, the memory 1109 may include a volatile memory or a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1109 in this embodiment of this application includes but is not limited to these memories and any memory of another proper type.

The processor 1110 may include one or more processing units. Optionally, an application processor and a modem processor are integrated into the processor 1110. The application processor mainly processes an operating system, a user interface, an application, or the like. The modem processor mainly processes a wireless communication signal, for example, a baseband processor. It may be understood that, alternatively, the modem processor may not be integrated into the processor 1110.

The radio frequency unit 1101 is configured to send an SR triggered by a delay information report to a network side device on a target sending resource. The processor 1110 is configured to determine, in a case that the terminal determines that a delay information report is triggered, the target sending resource for the SR based on SR resource information configured by the network side device, where the SR is triggered by reporting the delay information report. The SR resource information includes at least one of the following: first configuration information, used to indicate at least one sending resource for the SR; and second configuration information, used to indicate at least one sending resource for an SR for a non-delay information report.

The terminal determines, in the case that the terminal determines that the delay information report is triggered, the target sending resource for the SR based on the SR resource information configured by the network side device, where the SR is triggered by reporting the delay information report. Because the SR resource information includes at least one of the following: the first configuration information, used to indicate the at least one sending resource for the SR; and the second configuration information, used to indicate the at least one sending resource for the SR for the non-delay information report, the terminal may determine the target sending resource based on any one of the first configuration information and the second configuration information, and then send the SR for the delay information report to the network side device on the target sending resource. Therefore, the network side device obtains a delay information report for buffered data of the terminal in a timely manner, and schedules the buffered data of the terminal in a timely manner. This can prevent the buffered data of the terminal from being lost due to timeout of the waiting time, to improve transmission performance of uplink data.

It may be understood that for the implementation processes of the implementations mentioned in this embodiment, refer to the related descriptions of the method for sending the scheduling request SR for the delay information report in the method embodiment. A same or corresponding technical effect is achieved. To avoid repetition, details are not described herein again.

An embodiment of this application further provides a network side device, including a processor and a communication interface. The communication interface is coupled to the processor, and the processor is configured to run a program or an instruction to implement the steps in the method embodiment shown in FIG. 5. This network side device embodiment is corresponding to the foregoing method embodiment of the network side device. Each implementation process and implementation of the foregoing method embodiment may be applicable to this network side device embodiment, and a same technical effect can be achieved.

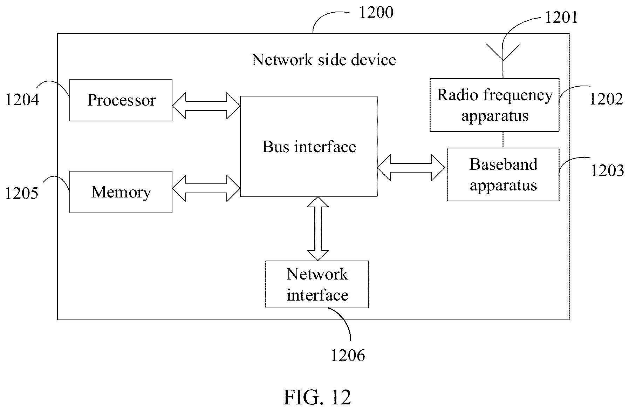

Specifically, an embodiment of this application further provides a network side device. As shown in FIG. 12, the network side device 1200 includes an antenna 1201, a radio frequency apparatus 1202, a baseband apparatus 1203, a processor 1204, and a memory 1205. The antenna 1201 is connected to the radio frequency apparatus 1202. In an uplink direction, the radio frequency apparatus 1202 receives information through the antenna 1201, and sends the received information to the baseband apparatus 1203 for processing. In a downlink direction, the baseband apparatus 1203 processes information that needs to be sent, and sends processed information to the radio frequency apparatus 1202. The radio frequency apparatus 1202 processes the received information, and sends processed information through the antenna 1201.

In the foregoing embodiment, the method performed by the network side device may be implemented in the baseband apparatus 1203. The baseband apparatus 1203 includes a baseband processor.

For example, the baseband apparatus 1203 may include at least one baseband board. A plurality of chips are disposed on the baseband board. As shown in FIG. 12, one chip is, for example, a baseband processor, and is connected to the memory 1205 by using a bus interface, to invoke a program in the memory 1205 to perform the operations of the network side device shown in the foregoing method embodiment.

The network side device may further include a network interface 1206, and the interface is, for example, a common public radio interface (Common Public Radio Interface, CPRI).

Specifically, the network side device 1200 in this embodiment of this application further includes an instruction or a program that is stored in the memory 1205 and that is executable on the processor 1204. The processor 1204 invokes the instruction or the program in the memory 1205 to execute the method executed by the modules shown in FIG. 12, and a same technical effect is achieved. To avoid repetition, details are not described herein again.

An embodiment of this application further provides a readable storage medium. The readable storage medium stores a program or an instruction, and the program or the instruction is executed by a processor to implement the processes in the embodiment of the method for sending the scheduling request SR for the delay information report, and a same technical effect can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface, the communication interface is coupled to the processor, and the processor is configured to run a program or an instruction to implement the processes of the embodiment of the method for sending the scheduling request SR for the delay information report, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, and the program/program product is executed by at least one processor to implement the processes of the embodiment of the method for sending the scheduling request SR for the delay information report, and a same technical effect can be achieved. To avoid repetition, details are not described herein again.

An embodiment of this application further provides a system for sending a scheduling request SR for a delay information report, including a terminal and a network side device. The terminal may be configured to perform the steps of the foregoing method for sending the scheduling request SR for the delay information report on the terminal side, and the network side device may be configured to perform the steps of the foregoing method for sending the scheduling request SR for the delay information report on the network side device side. Optionally, the system architecture shown in FIG. 1 may be used for the system for sending the scheduling request SR for the delay information report.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and apparatuses in the embodiments of this application is not limited to performing functions in the order shown or discussed, but may also include performing the functions in a basically simultaneous manner or in opposite order based on the functions involved. For example, the described method may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by a computer software product in addition to a necessary universal hardware platform or by hardware only. The computer software product is stored in a storage medium (such as a ROM, a RAM, a magnetic disk, or an optical disc), and includes several instructions for instructing a terminal or a network side device to perform the methods in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make implementations in many forms without departing from the purpose of this application and the protection scope of the claims, the implementations fall within the protection of this application.

## Claims

1. A method for sending a scheduling request SR for a delay information report, comprising:
determining, by a terminal in a case that the terminal determines that a delay information report is triggered, a target sending resource for an SR based on SR resource information configured by a network side device, wherein the SR is triggered by reporting the delay information report; and
sending, by the terminal, the SR to the network side device on the target sending resource, wherein
the SR resource information comprises at least one of the following:
first configuration information, used to indicate at least one sending resource for the SR; and
second configuration information, used to indicate at least one sending resource for an SR for a non-delay information report.

2. The method for sending the scheduling request SR for the delay information report according to claim 1, wherein the first configuration information meets at least one of the following:
one medium access control MAC entity of the terminal corresponds to one sending resource for the SR;
one wireless link of the terminal corresponds to one sending resource for the SR; and
one logical channel LCH of the terminal corresponds to one sending resource for the SR.

3. The method for sending the scheduling request SR for the delay information report according to claim 1 or 2, wherein the determining, by a terminal in a case that the terminal determines that a delay information report is triggered, a target sending resource for an SR based on SR resource information configured by a network side device comprises at least one of the following:
in a case that the terminal determines that the delay information report is triggered, and the SR resource information comprises the first configuration information, determining, by the terminal, the target sending resource based on the first configuration information; and
in a case that the terminal determines that the delay information report is triggered, and the SR resource information comprises the second configuration information, determining, by the terminal, the target sending resource based on the second configuration information.

4. The method for sending the scheduling request SR for the delay information report according to claim 3, wherein that the SR resource information comprises the second configuration information comprises any one of the following:
the network side device is not configured with the first configuration information; and
the terminal does not support configuration of the first configuration information.

5. The method for sending the scheduling request SR for the delay information report according to claim 3, wherein the determining the target sending resource based on the second configuration information comprises at least one of the following:
determining, by the terminal, the target sending resource based on any sending resource that is for the SR for the non-delay information report and that is indicated by the second configuration information; and
determining, by the terminal, the target sending resource based on a sending resource that is for the SR for the non-delay information report and that is closest to a current time point and indicated by the second configuration information.

6. The method for sending the scheduling request SR for the delay information report according to any one of claims 1 to 5, wherein the method further comprises:
receiving, by the terminal, the SR resource information from the network side device.

7. The method for sending the scheduling request SR for the delay information report according to any one of claims 1 to 6, wherein the method further comprises:
receiving, by the terminal, an uplink transmission grant from the network side device; and
sending, by the terminal, the delay information report to the network side device based on the uplink transmission grant.

8. The method for sending the scheduling request SR for the delay information report according to any one of claims 1 to 7, wherein the delay information report comprises any one of the following:
delay information of at least one LCH or at least one logical channel group LCG; and
buffer information of at least one LCH or at least one LCG, and delay information corresponding to the buffer information.

9. The method for sending the scheduling request SR for the delay information report according to any one of claims 1 to 8, wherein the delay information report is sent via a MAC control element CE.

10. The method for sending the scheduling request SR for the delay information report according to any one of claims 1 to 9, wherein the sending, by the terminal, the SR to the network side device on the target sending resource comprises:
in a case that the target sending resource is shared with the SR that triggers the non-delay information report, sending, by the terminal, the SR to the network side device on the target sending resource.

11. The method for sending the scheduling request SR for the delay information report according to claim 10, wherein after the sending, by the terminal, the SR to the network side device on the target sending resource, the method further comprises at least one of the following:
in a case that an SR-prohibit timer corresponding to the target sending resource is running, restarting, by the terminal, the SR-prohibit timer;
in a case that an SR-prohibit timer corresponding to the target sending resource is not running, starting, by the terminal, the SR-prohibit timer; and
in a case that the SR for the delay information report has been sent at least once and is not canceled, sending, by the terminal, the SR to the network side device after the SR-prohibit timer expires.

12. The method for sending the scheduling request SR for the delay information report according to claim 11, wherein the method further comprises:
after the terminal sends the delay information report to the network side device, canceling, by the terminal, all SRs for delay information reports in a pending state, and stopping the SR-prohibit timer.

13. The method for sending the scheduling request SR for the delay information report according to any one of claims 1 to 9, wherein the SR resource information comprises duration of a delay SR-prohibit timer.

14. The method for sending the scheduling request SR for the delay information report according to claim 13, wherein the sending, by the terminal, the SR to the network side device on the target sending resource comprises:
in a case that the target sending resource is shared with the SR that triggers the non-delay information report, and the delay SR-prohibit timer is not running or has expired, sending, by the terminal, the SR to the network side device on the target sending resource.

15. The method for sending the scheduling request SR for the delay information report according to claim 14, wherein after the sending, by the terminal, the SR to the network side device on the target sending resource, the method further comprises:
starting, by the terminal, the delay SR-prohibit timer.

16. The method for sending the scheduling request SR for the delay information report according to claim 15, wherein the method further comprises:
after the terminal sends the delay information report to the network side device, canceling, by the terminal, all SRs for delay information reports in a pending state, and stopping the delay SR-prohibit timer.

17. The method for sending the scheduling request SR for the delay information report according to any one of claims 1 to 9, wherein the SR resource information comprises status information, and the status information is used to indicate that sending of the SR for the delay information report is allowed or prohibited.

18. The method for sending the scheduling request SR for the delay information report according to claim 17, wherein the sending, by the terminal, the SR to the network side device on the target sending resource comprises:
in a case that the target sending resource is shared with the SR that triggers the non-delay information report, and the status information is used to indicate that sending of the SR for the delay information report is allowed, sending, by the terminal, the SR to the network side device on the target sending resource.

19. The method for sending the scheduling request SR for the delay information report according to claim 18, wherein after the sending, by the terminal, the SR to the network side device on the target sending resource, the method further comprises:
setting, by the terminal, the status information to indicate that sending of the SR for the delay information report is prohibited, and starting or restarting an SR-prohibit timer corresponding to the target sending resource; and
in a case that the SR-prohibit timer expires, setting, by the terminal, the status information to indicate that sending of the SR for the delay information report is allowed.

20. The method for sending the scheduling request SR for the delay information report according to claim 19, wherein the method further comprises:
after the terminal sends the delay information report to the network side device, stopping, by the terminal, the SR-prohibit timer, and setting the status information to indicate that sending of the SR for the delay information report is allowed.

21. A method for sending a scheduling request SR for a delay information report, comprising:
configuring, by a network side device, SR resource information corresponding to a terminal, wherein the SR resource information is used by the terminal to determine a target sending resource for an SR based on the SR resource information in a case that the terminal determines that a delay information report is triggered, and the SR is triggered by reporting the delay information report;
sending, by the network side device, the SR resource information to the terminal; and
receiving, by the network side device, the SR sent by the terminal, wherein
the SR resource information comprises at least one of the following:
first configuration information, used to indicate at least one sending resource for the SR; and
second configuration information, used to indicate at least one sending resource for an SR for a non-delay information report.

22. The method for sending the scheduling request SR for the delay information report according to claim 21, wherein the configuring, by a network side device, SR resource information corresponding to a terminal comprises at least one of the following:
configuring, by the network side device based on a medium access control MAC entity of the terminal, the SR resource information corresponding to the terminal;
configuring, by the network side device based on a wireless link of the terminal, the SR resource information corresponding to the terminal; and
configuring, by the network side device based on a logical channel LCH of the terminal, the SR resource information corresponding to the terminal.

23. The method for sending the scheduling request SR for the delay information report according to claim 21 or 22, wherein the first configuration information meets at least one of the following:
one MAC entity of the terminal corresponds to one sending resource for the SR;
one wireless link of the terminal corresponds to one sending resource for the SR; and
one LCH of the terminal corresponds to one sending resource for the SR.

24. The method for sending the scheduling request SR for the delay information report according to any one of claims 21 to 23, wherein the method further comprises:
sending, by the network side device, an uplink transmission grant to the terminal; and
receiving, by the network side device, the delay information report sent by the terminal.

25. The method for sending the scheduling request SR for the delay information report according to any one of claims 21 to 24, wherein the delay information report comprises any one of the following:
delay information of at least one LCH or at least one logical channel group LCG; and
buffer information of at least one LCH or at least one LCG, and delay information corresponding to the buffer information.

26. The method for sending the scheduling request SR for the delay information report according to any one of claims 21 to 25, wherein the delay information report is sent via a MAC control element CE.

27. An apparatus for sending a scheduling request SR for a delay information report, comprising:
a first determining module, configured to determine, in a case that the apparatus determines that a delay information report is triggered, a target sending resource for an SR based on SR resource information configured by a network side device, wherein the SR is triggered by reporting the delay information report; and
a first sending module, configured to send the SR to the network side device on the target sending resource, wherein
the SR resource information comprises at least one of the following:
first configuration information, used to indicate at least one sending resource for the SR; and
second configuration information, used to indicate at least one sending resource for an SR for a non-delay information report.

28. An apparatus for sending a scheduling request SR for a delay information report, comprising:
a second determining module, configured to configure SR resource information corresponding to a terminal, wherein the SR resource information is used by the terminal to determine a target sending resource for an SR based on the SR resource information in a case that the terminal determines that a delay information report is triggered, and the SR is triggered by reporting the delay information report;
a second sending module, configured to send the SR resource information to the terminal; and
a first receiving module, configured to receive the SR sent by the terminal, wherein
the SR resource information comprises at least one of the following:
first configuration information, used to indicate at least one sending resource for the SR; and
second configuration information, used to indicate at least one sending resource for an SR for a non-delay information report.

29. A terminal, comprising a processor and a memory, wherein the memory stores a program or an instruction that is executable on the processor, and the program or the instruction is executed by the processor to implement the steps of the method for sending the scheduling request SR for the delay information report according to any one of claims 1 to 20.

30. A network side device, comprising a processor and a memory, wherein the memory stores a program or an instruction that is executable on the processor, and the program or the instruction is executed by the processor to implement the steps of the method for sending the scheduling request SR for the delay information report according to any one of claims 21 to 26.

31. A readable storage medium, wherein the readable storage medium stores a program or an instruction, and the program or the instruction is executed by a processor to implement the steps of the method for sending the scheduling request SR for the delay information report according to any one of claims 1 to 20 or the steps of the method for sending the scheduling request SR for the delay information report according to any one of claims 21 to 26.

32. A computer program product, wherein the computer program product is executed by at least one processor to implement the method for sending the scheduling request SR for the delay information report according to any one of claims 1 to 20, or implement the method for sending the scheduling request SR for the delay information report according to any one of claims 21 to 26.

33. An electronic device, wherein the electronic device is configured to perform the method for sending the scheduling request SR for the delay information report according to any one of claims 1 to 20, or perform the method for sending the scheduling request SR for the delay information report according to any one of claims 21 to 26.

34. A chip, wherein the chip comprises a processor and a communication interface, the communication interface is coupled to the processor, and the processor is configured to run a program or an instruction to implement the method for sending the scheduling request SR for the delay information report according to any one of claims 1 to 20, or implement the method for sending the scheduling request SR for the delay information report according to any one of claims 21 to 26.
